# EUROPEAN PATENT APPLICATION

(11) **EP 2 072 403 A1**
(43) Date of publication of application: **24.06.2009**
(21) Application number: 07807777.3
(22) Date of filing: 21.09.2007
(51) Int. Cl.: B65B 5/00, B65B 35/30, B65B 35/54

(54) **BOXING APPARATUS AND PACKAGING APPARATUS**

(30) Priority: 26.09.2006 JP 2006261586; 26.09.2006 JP 2006261587
(71) Applicant: ISHIDA CO., Ltd., Kyoto-shi, Kyoto 606-8392 (JP)
(72) Inventor: TAKAYAMA, Motoki, Ritto-shi Shiga 520-3026 (JP); IWASA, Seisaku, Ritto-shi Shiga 520-3026 (JP)
(74) Representative: Skone James, Robert Edmund
(86) International application number: PCT/JP2007/068446
(87) International publication number: WO 2008/038598

(57) **Abstract**

A boxing device (100) includes a collecting unit (5), a group weight checker (6), a control unit (10), and a boxing/sealing unit (7), and packs a predetermined weight or a predetermined number of bags in a box. The collecting unit (5) collects the bags as a group. The group weight checker (6) measures the weight of the group. The control unit (10) determines whether or not it is adequate to pack the group in a box based on the weight measured by the group weight checker (6). The boxing/sealing unit (7) packs, in one box, a plurality of the groups determined by the control unit (10) to be adequate to be packed in a box. Accordingly, it is possible to detect problems such as a defective product and the like before box packing, and take an adequate countermeasure. As a result, the present invention is more efficient than the conventional boxing device that determines the adequacy of the weight (number) of the bags after box packing is completed and eliminates a whole box in which a problem is found from the production line.

## Description

### TECHNICAL FIELD

The present invention relates to a boxing device that packs a predetermined weight or a predetermined number of articles in a box by collecting a plurality of articles as a group and gathering a plurality of such groups. In addition, the present invention relates to a packaging device that packages a plurality of articles whose weights are known in a packaging material.

### BACKGROUND ART

As a boxing device that packs a predetermined weight or a predetermined number of articles in a box, technology to improve the adequacy of the weight of articles to be packed in a box has been proposed, in which the weights of individual articles are measured and a combination of articles having a target weight is attained based on the measured weights (for example, see Patent Document 1).

Incidentally, with a type of boxing device that packs a predetermined weight or a predetermined number of articles in a box by collecting some of articles to be packed in a box as a group and gathering a plurality of such groups, there are cases where an article gets stuck while being conveyed before being added to a group and therefore does not reach a predetermined position and where articles grouped together fall because the articles are bag-shaped or the like and therefore a predetermined weight or a predetermined number of articles are not put in a box. Therefore, the gross weight is checked after box packing is completed in order to confirm the adequacy of the weight (number) of articles packed in the box.
<Patent Document 1> JP-A Publication No. H2-109826

### DISCLOSURE OF THE INVENTION

### <OBJECT TO BE ACHIEVED BY THE INVENTION>

However, when the gross weight is checked after box packing is completed and the weight (number) of the articles packed in the box is turned out to be inadequate, the whole box with the articles packed therein needs to be eliminated from the production line, causing a decrease in production efficiency. In addition, when the total number of articles to be packed in one box is large and variations in the weights of individual articles are accumulated, it is not possible to distinguish whether an error in the weight of the whole box is caused by missing of some articles or by the variations in the weights of the individual articles, and thus any box having such an inadequate weight had to be regarded uniformly as a defective and eliminated from the production line.

In view of such situation, an object of the present invention is to provide a boxing device that packs a predetermined weight or a predetermined number of articles in a box by collecting a plurality of articles as a group and gathering a plurality of such groups, in which the weight (number) of the group to be packed in a box is checked after the weights of individual articles are obtained and before these articles are packed in a box in order to prevent a reduction in production efficiency.

In addition, as a packaging device that packages a plurality of articles in a packaging material, technology to improve hereby the adequacy of the weight of the articles to be packaged together has been proposed, in which the weights of individual articles are measured and a combination of articles having a target weight is attained based on the measured weights (for example, see Patent Document 1).

Incidentally, with a type of packaging device that collects a plurality of articles as a group and packages the articles in a packaging material, there are cases where an article gets stuck while being conveyed before being put into a group and therefore does not reach a predetermined position and where articles grouped together fall because the articles are bag-shaped or the like and therefore not all of the intended plurality of articles are packaged in the packaging material. Therefore, the gross weight is checked after packaging is completed in order to confirm the adequacy of the weight (number) of articles that are packaged.

Further, when the packaging material used for packaging is a cardboard container or a recyclable container, the weight thereof may greatly change due to the humidity, aged deterioration, and other reasons, and therefore the range of the change in the weight of the packaging material may be greater than the weight of each article. Consequently, because of the change in the weight of the packaging material, there has been a case, for example, where the weight of packaged articles is erroneously determined to be adequate even when some of a plurality of articles to be packaged were left out before being packaged and therefore are not included in the packaging material. In other words, even when the gross weight with tare included is checked after packaging is completed, it has not been possible to confirm the adequacy of the weight (number) of articles themselves that are packaged.

In view of such situation, another object of the present invention is to provide a packaging device that packages a plurality of articles whose weights are known in a packaging material, in which the gross weight with tare included is checked after packaging is completed, thereby allowing to confirm the adequacy of the weight (number) of articles that are packaged.

### <MEANS TO ACHIEVE THE OBJECTS>

A boxing device according to a first aspect of the present invention includes a collecting unit, a group weight measuring unit, a determination unit, and a boxing unit, and packs a predetermined weight or a predetermined number of articles in a box. The collecting unit collects articles as a group. The group weight measuring unit measures a weight of the group. Based on the weight measured by the group weight measuring unit, the determination unit determines whether or not the group is appropriate to be packed in a box. The boxing unit packs, in the box, a plurality of the groups determined by the determination unit to be appropriate to be packed in the box.

A boxing device according to a second aspect of the present invention is the boxing device according to the first aspect of the present invention, further including an individual weight measuring unit. The individual weight measuring unit measures a weight of each of the articles and positioned on the upstream side of the group weight measuring unit..

A boxing device according to a third aspect of the present invention is the boxing device according to the first or second aspect of the present invention, further including a replenishment unit. The replenishment unit has a stocking place for stocking the articles. In addition, The replenishment unit replenishes, when the group is determined by the determination unit to be not adequate to be packed in the box because of a shortage in the number of the articles, the shortage with the article from the stocking place.

A packaging device according to a fourth aspect of the present invention includes a tare weight obtaining unit, a packaging unit, and a weight checking unit. The tare weight obtaining unit obtains a weight of a packaging material. The packaging unit packages a plurality of articles whose weights are known in the packaging material. The weight checking unit checks a weight of the plurality of articles packaged in the packaging material, using a sum of the weight obtained by the tare weight obtaining unit and the known weights as a reference.

A packaging device according to a fifth aspect of the present invention includes a tare weight obtaining unit, a packaging unit, a gross weight measuring unit, and a determination unit. The tare weight obtaining unit obtains a weight of a packaging material. The packaging unit packages a plurality of articles whose weights are known in the packaging material. The gross weight measuring unit measures a weight of the plurality of articles packaged in the packaging material. The determination unit determines whether or not the plurality of articles are adequately packaged in the packaging material based on a sum of the weight obtained by the tare weight obtaining unit and the known weights, and the weight measured by the gross weight measuring unit.

A packaging device according to a sixth aspect of the present invention is the packaging device according to the fourth or fifth aspect of the present invention, wherein the tare weight obtaining unit measures the weight of the packaging material.

A packaging device according to a seventh aspect of the present invention is the packaging device according to the fourth or fifth aspect of the present invention, wherein the packaging material has a memory medium in which the weight of the packaging material is stored. The tare weight obtaining unit reads the weight of the packaging material stored in the memory medium.

A packaging device according to an eighth aspect of the present invention is the packaging device according to any one of the fourth through seventh aspects of the present invention, wherein the packaging material is a cardboard container.

A packaging device according to a ninth aspect of the present invention is the packaging device according to any one of the fourth through eighth aspects of the present invention, wherein the packaging material is a recyclable container.

### <EFFECTS OF THE INVENTION>

The first aspect accomplishes a beneficial effect as follows. Because the weight of a group of articles is measured and the adequacy of the weight (number) of the articles to be packed in a box is determined based on the measured weight, it is possible to detect problems such as a defective article and the like before box packing is performed and take an appropriate countermeasure. As a result, the present invention is more efficient than the conventional boxing device that determines the adequacy of the weight (number) after box packing is completed and eliminates a whole box in which a problem is found from the production line. In addition, even when a total number of the articles to be packed in one box is large and variations in the weight of each article are multiply added, it is possible to prevent a box whose weight turned out to be significantly different due to the variations in the weight of each article from being regarded as a defective box because the articles to be packed in the box are separated into a plurality of groups and the weight is checked for each group having a small number of bags.

The second aspect accomplishes a beneficial effect as follows, in addition to the effect accomplished by the first aspect. Because the weight of each individual article is actually measured, it is possible to more accurately determine the weight of a group of articles.

The third aspect accomplishes a beneficial effect as follows, in addition to the effects accomplished by the first and second aspects. When it is determined that there is a shortage in the number of articles, the shortage of the articles is automatically replenished. Therefore, even when an article to be packed in a box is left out, it is possible to maintain good productivity.

The fourth through ninth aspects accomplish beneficial effects as follows. Because the sum of the known weights of the plurality of articles to be packed and the weight measured by the tare weight obtaining unit is used as a reference when checking the weight of the plurality of articles packaged in the packaging material, even when the tare weight significantly changes due to the humidity, aged deterioration, and other reasons, it is possible to confirm the adequacy of the weight (number) of the articles that are packaged by checking the gross weight with tare included after packaging is completed. In particular, even when the packaging material is made of cardboard (made of paper) that is highly hygroscopic and the weight easily changes due to the effect of humidity, or even when the packaging material is a recyclable container and there is a concern for the change in the weight due to long-term use, the adequacy of the weight or the number of the articles that are packaged is guaranteed.

### BRIEF DESCRIPTION OF THE DRAWINGS

Figure 1 is an elevation view of a boxing device.
Figure 2 is a plan view of the boxing device.
Figure 3 is a function block view of the boxing device.
Figure 4 is a perspective view of boxed products produced by the boxing device.
Figure 5 is an enlarged view of a thickness detection unit of a seal checker.
Figure 6 is a view to describe the operation of a stock unit.
Figure 7 is a lateral view of a collecting unit.
Figure 8 is a view to describe the operation of a boxing/sealing unit.
Figure 9 is a determination process flow based on the bag thickness.
Figure 10 is a determination process flow based on the bag weight.
Figure 11 is an alternative example of the determination process flow based on the bag thickness.

### DESCRIPTION OF THE REFERENCE NUMERALS

- 1: Individual weight checker
- 2: Seal checker
- 3: Defective bag sorting unit
- 4: Stock unit
- 5: Collecting unit
- 6: Group weight checker
- 7: Boxing/sealing unit
- 8: Gross weight checker
- 9: Defective box sorting unit

### BEST MODE FOR CARRYING OUT THE INVENTION

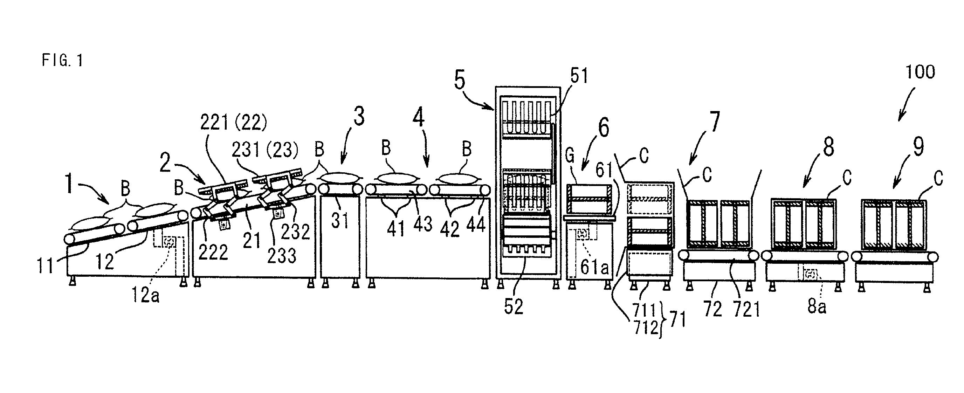

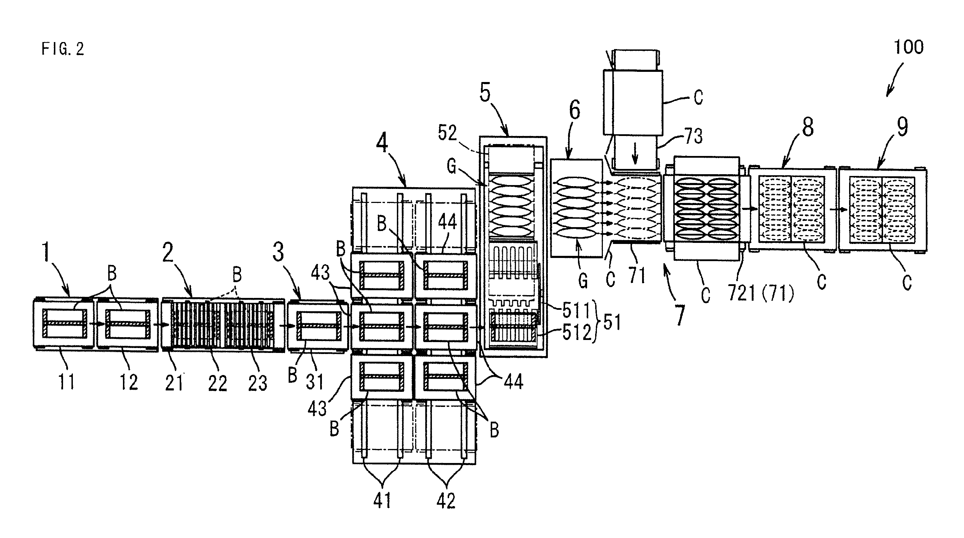

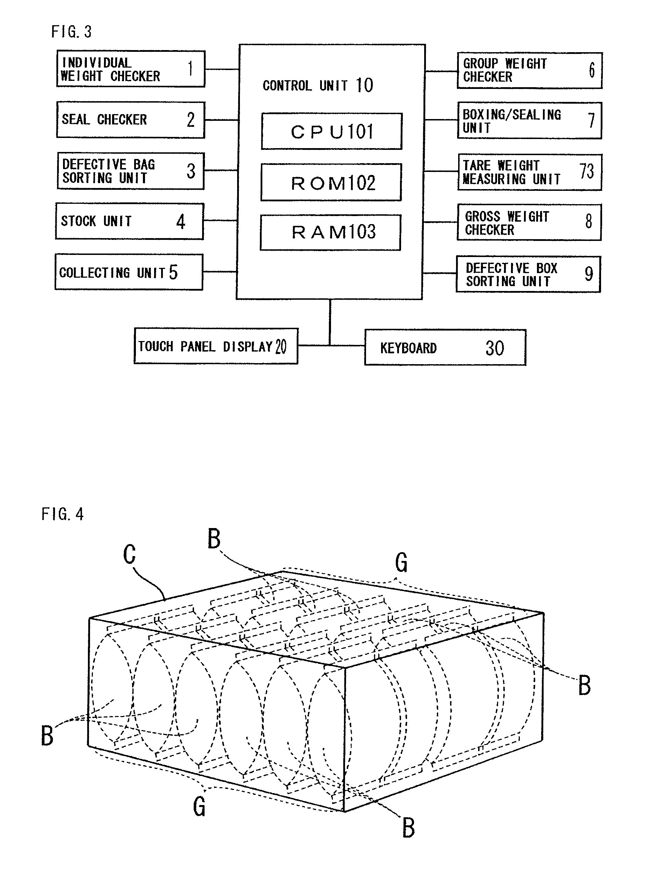

Below, a boxing device (packaging device) 100 according to an embodiment of the present invention is described with reference to the drawing. Figure 1 is an elevation view of the boxing device 100, Figure 2 is a plan view thereof, and Figure 3 is a function block view thereof. Figure 4 is a perspective view of boxed products produced by the boxing device 100.

### <OVERVIEW OF THE BOXING DEVICE IN THE PRESENT EMBODIMENT>

The boxing device 100 according to this embodiment is a packaging device that collects, as a group G, a plurality (6) of individual bags (articles) B sequentially supplied from a bag-manufacturing and packaging apparatus (not shown) in the upstream process, and repeatedly packs a plurality (2) of groups G of bags in a box C of a defined size. With this device, as shown in Figure 4, a predetermined number (6 pieces x 2 lines = 12 pieces in total) of the bags B are packed in the box C, and the opening of the box is sealed by a tape or the like. The box C as a packaging material is a cardboard container and is also a recyclable container that can be collected at the destination of delivery and reused.

As shown in Figures 1 and 2, the boxing device 100 includes an individual weight checker 1, a seal checker 2, a defective bag sorting unit 3, a stock unit 4, a collecting unit 5, a group weight checker 6, a boxing/sealing unit 7, a gross weight checker 8, and a defective box sorting unit 9, which are arranged in that order from the upstream process side (left side in the figures). These components are controlled by a control unit 10 shown in Figure 3. The control unit 10 includes a CPU (central processing unit) 101, a ROM (read-only memory) 102, and a RAM (random-access memory) 103. The CPU 101 transmits a control signal to each unit of the boxing device 100 and also executes, on the RAM 103, a program to perform calculation, determination, and selection processes based on an information signal that the control unit 10 receives from each unit of the boxing device 100. Note that the control unit 10 includes a touch panel display 20 and a keyboard 30, which are connected thereto, and which respectively serve as a display unit that displays the device operating condition and the like and an operation inputting unit that is used for setting various setting values and for inputting operations.

### <INDIVIDUAL WEIGHT CHECKER 1>

The individual weight checker 1 is an individual weight obtaining means to obtain a weight wₙ of each individual bag B while sequentially conveying the individual bags B, which are continuously supplied from the upstream process, to the downstream side at a predetermined speed. Specifically, a transport conveyor 11 that receives the individual bags B supplied and conveys the same to the downstream side, and a weighing transport conveyor 12 that measures, by a load cell 12a, the weight wₙ of each individual bag B discharged from the transport conveyor 11 and that conveys the same to the downstream side are arranged in line. Based on a weight information signal received from the load cell 12a, the control unit 10 determines whether or not the weight wₙ of the individual bag B is within a predetermined weight range (upper weight limit w_{U}, lower weight limit w_{L}). When the weight wₙ of the individual bag B is outside the predetermined weight range, the control unit 10 discharges the bag B as a defective product to the outside of the process by the defective bag sorting unit 3 (described later). In addition, in order to determine the adequacy of the weight or the number of the individual bags B included in the group G of bags (i.e., that there are no bags that are left out from the group G of bags and the like) based on a weight Wg of the group G of bags measured by the group weight checker 6 in the downstream process, the control unit 10 calculates, in advance, a group weight W2 of such group G of bags, by adding the weights wₙ of the plurality of bags B included in that group G of bags whose weight Wg is measured by the group weight checker 6.

### <SEAL CHECKER 2>

The seal checker 2 is a thickness detection means to apply pressure on each individual bag B in a thickness direction thereof and detects a thickness dₙ of the individual bags B at the time of pressure application, while sequentially conveying the individual bags B continuously supplied from the individual weight checker 1 to the downstream side at a predetermined speed. The seal checker 2 is used for a determination of the adequacy of sealing of the individual bags B based on the thickness. Specifically, the seal checker 2 includes a transport conveyor 21 that conveys, to the downstream side, the individual bags B continuously supplied from the individual weight checker 1 in the upstream process; a bag leveling unit 22 that applies pressure using a pressing member 221 to each individual bag B conveyed on the transport conveyor 21 to level out the entire individual bag to a uniform thickness; and a thickness detection unit 23 that applies pressure, using a pressing member 231 driven by a servo motor 233, to the individual bag B whose thickness is leveled out by the bag leveling unit 22, detects a thickness dₙ of the individual bag based on the angular displacement of the servo motor 233, and transmits a thickness information signal.

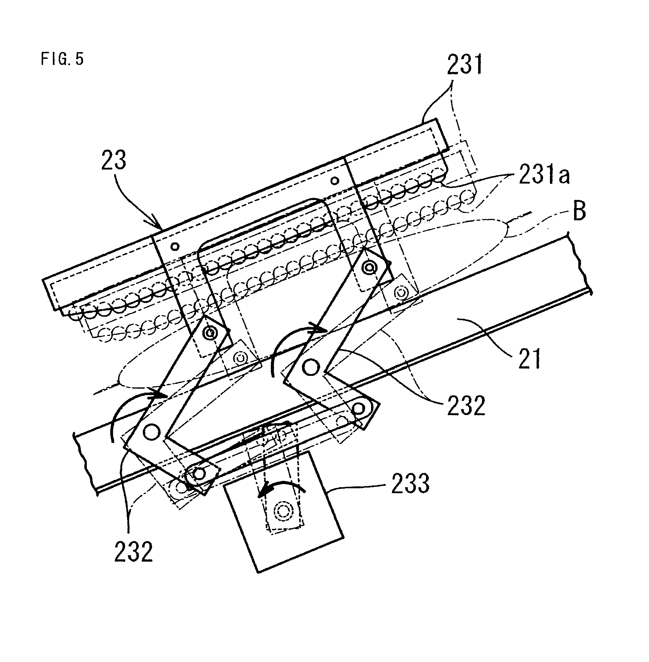

As shown in Figure 5, the thickness detection unit 23 includes the pressing member 231 disposed so as to cover the conveying surface of the transport conveyor 21 from above; L-shaped parallel links 232 that are pivotally supported on the lateral side of the transport conveyor 21 and support the pressing member 231 such that the pressing member 231 can move closer to and away from the transport conveyor 21; and the servo motor 233 that moves the pressing member 231 closer to and away from the transport conveyor 21 by pivotally driving the parallel links 232. At the timing when the individual bag B passes through below the pressing member 231, the servo motor 233 is driven in a direction indicated by the arrow in Figure 5, and thereby the thickness of the individual bag B can be detected. Note that a plurality of rollers 231a are disposed on the lower surface of the pressing member 231 in order to allow the individual bag B subject to pressure to smoothly pass through. As is the same with the thickness detection unit 23, the bag leveling unit 22 includes the pressing member 221 disposed with a plurality of rollers on its lower surface, which is supported by parallel links 222 (Figure 2). By pivoting the parallel links 222 at a predetermined torque, the individual bag B that passes through below the pressing member 221 is leveled out and the thickness of the entire bag is made uniform.

Here, based on the thickness information signal received from the thickness detection unit 23, the control unit 10 determines whether or not the thickness dₙ of each individual bag B is within a predetermined thickness range (upper limit d_{U}, lower limit d_{L}). When the thickness dₙ of the individual bag B is outside the predetermined thickness range, it may be due to an air leakage due to sealing failure or an excess or deficiency in the amount of charged air. Thus, the control unit 10 transmits a control signal to the defective bag sorting unit 3 in the downstream process so as to discharge such individual bag B as a defective product to the outside of the process. In addition, as a calculation means to add up the thicknesses dₙ of a plurality of individual bags B that are collected as a group G of bags by the collecting unit 5 in the downstream process in order to calculate a thickness d of the group G of bags, the control unit 10 serves as a determination means to determine, in advance, whether or not it is adequate to pack the group G of bags in the box C of the defined size based on a result of the addition.

### <DEFECTIVE BAG SORTING UNIT 3>

When it is determined by the control unit 10 that the weight wₙ of the individual bag B obtained by the individual weight checker 1 is outside the predetermined weight range, or when it is determined by the control unit 10 that the thickness dₙ of the individual bag B detected by the seal checker 2 is outside the predetermined thickness range, the defective bag sorting unit 3 discharges such individual bag B to the outside of the process based on the control signal from the control unit 10. Specifically, an air jet nozzle (not shown) is disposed on the lateral side of a transport conveyor 31, and thereby a defective bag that passes through on the transport conveyor 31 is blown out in a direction orthogonal to the conveying direction. Note that when the weight of the individual bag B is large and cannot be easily discharged by the air jet, the individual bag B may be pushed out to the side by an elastic cylinder or the like.

### <STOCK UNIT 4>

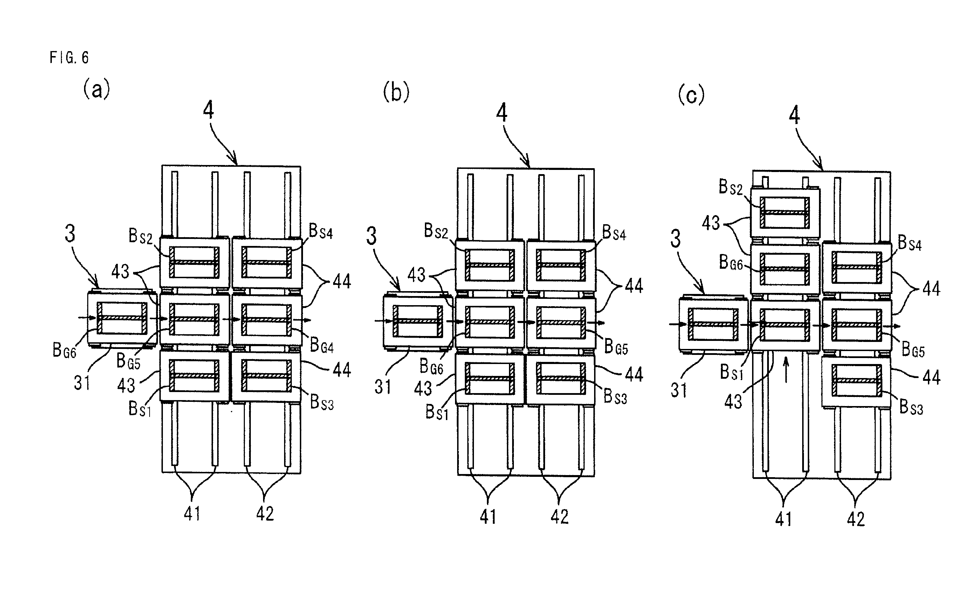

As shown in Figures 2 and 6, the stock unit 4 includes a plurality (2) of pairs of slide rails 41 and 42 extending in a direction orthogonal (transverse direction) to the conveying direction of the individual bag B on the conveyor; a plurality (3) of lines of the transport conveyors 43 --- 43 and 44 --- 44 respectively supported by the slide rails 41 and 42 and arranged in the transverse direction; and a drive unit (not shown) that moves the transport conveyors 43 --- 43 and 44 --- 44 along the slide rails 41, 42. As shown in Figure 6(a), except for one line of the transport conveyor 43 and one line of the transport conveyor 44 which serve as a passageway for connecting the upstream process to the downstream process, the plurality of lines of the transport conveyors 43 --- 43 and 44-44 respectively have spare individual bags B_{S1}-_{S4} stocked therein. As is the case with other individual bags B, the spare individual bags B_{S1}-_{S4} are the bags that have passed through the individual weight checker 1 and the seal checker 2 and whose weights and thicknesses are known. The known data are stored by the control unit 10 in a manner associated with the transport conveyors each having the relevant individual bags stocked therein.

When the thickness of the group G of bags (= a sum of the thicknesses of a plurality of individual bags B_{G1-G6} that constitute a group) that are collected by the collecting unit 5 is too large (or too small) and it is determined in advance that it is inadequate to pack such group in the cardboard box C of the defined size, the stock unit 4 selects an individual bag B_{Gn} to be replaced from the group G of bags and discharges it. At the same time, as an individual bag to be added to the group G of bags, the stock unit 4 selects an individual bag from the spare bags B_{S1-S4}, whose thickness is smaller (or larger) than the individual bag B_{Gn} to be replaced and with which the thickness of the group G of bags can be corrected to be within the predetermined range, and inserts the bag to the group. As a selection means, the control unit 10 selects an individual bag B_{Gn} to be replaced and a bag Bₛₙ to be added to the group G of bags instead thereof. However, with this boxing device 100, a sum of the thickness of the group G of bags is identified after the last individual bag B_{G6} among the plurality of individual bag B_{G1-G6} which constitute the group G of bags passes through the seal checker 2, i.e., at the time when the state shown in Figure 6(a) is reached. Thus, it is substantially difficult to retrieve any one of the individual bag B_{G1-G5} from the group G of bags and select any one of the spare individual bags B_{S1-S4} instead thereof to insert the spare to the group. Therefore, the last individual bag B_{G6} in the group G of bags is always selected as the individual bag B to be replaced.

Here, for example, when the individual bag B_{S1} among the spare individual bags B_{S1-S4} is selected as the individual bag B to be added instead of the individual bag B_{G6} to be replaced, first, as shown in Figure 6(b), after the individual bag B_{G6} to be replaced is taken onto the transport conveyor 43, as shown in Figure 6(c), the plurality of lines of the transport conveyors 43 are transversely slid in order to change the position of the conveyors. Thereby, the selected individual bag B_{S1} is supplied downstream and added to the group G of bags. The individual bag B_{G6} that is replaced is stocked in the transport conveyor 43 instead of the individual bag B_{S1} that is added. Further, the data of the weight and thickness detected by the individual weight checker 1 and the seal checker 2, respectively, are stored by the control unit 10 in a manner associated with the conveyor on which the individual bag B_{G6} is placed. Note that when the thickness of the group G of bags is determined to be inadequate to be packed in the box C although any one of the spare individual bags B_{S1-S4} is added and inserted instead of the individual bag B_{G6} that is replaced, the control unit 10 transmits to the touch panel display 20 a control signal to display a warning that the group is inadequate to be packed in the box, instead of replacing or adding an individual bag. Then, when such group G of bags reaches the group weight checker 6, the control unit 10 transmits to a discharge member (described later) a control signal to discharge the group G of bags to the outside of the process. Note that a control signal to stop the device may be transmitted instead of or together with displaying a warning and discharging a group of bags.

Here, in view of the balance between the installation space of the stock unit 4 and the timing to change the position of the conveyors, the transport conveyors are set in 2 pairs x 3 lines: however, the same number (4) of spare bags can be secured even with 1 pair x 5 lines or 4 pairs x 2 lines of the transport conveyors. Further, the number of spare individual bags Bₛₙ may be increased by additionally installing a slide rail or a conveyor. By so doing, the occurrence of the situation where a group G of bags must be discharged as described above is reduced, improving process efficiency. In addition, when a conveyor like the transport conveyor 31 is additionally installed between the seal checker 2 and the stock unit 4, it is possible to arrange more individual bags B in a standby manner in front of the stock unit 4, and thus the B_{G1-G5} in addition to the B_{G6} can be subject to replacement.

### <COLLECTING UNIT 5>

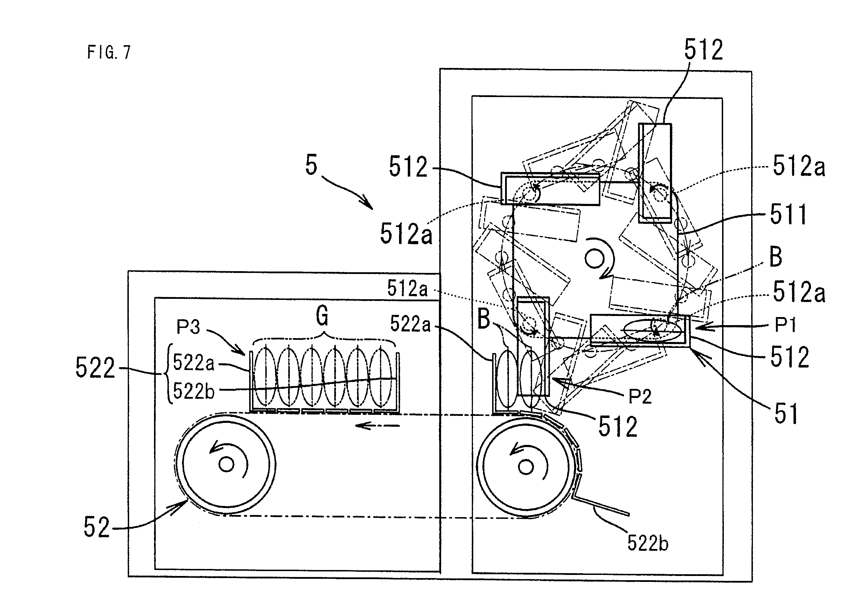

The collecting unit 5 is a device that receives individual bags sequentially supplied from the upstream process and collects them as the group G of bags in a state capable of being packed in a box. As shown in Figure 7, the collecting unit 5 includes a receiving unit 51 that receives the individual bags B from the upstream process and a holding unit 52 that holds the individual bags B received by the receiving unit 51, in a state of being collected in the thickness direction. The receiving unit 51 includes a rotor 511 that is rotated about a rotation axis 511a extending in a horizontal direction by a driving source (not shown), and a plurality (4) of receiving trays 512 that are disposed at predetermined intervals in a circumferential direction of the rotor 511 and that are rotatably supported by a rotation axis 512a. The receiving trays 512 are configured so as to move along a rotation path as shown by the dashed-dotted line along with the rotation of the rotor 511. Thereby, each receiving tray 512 receives the bag B supplied in a lying position at a position P1 shown in Figure 7 and supplies the bag B in a standing position to the holding unit 52 at a position P2.

The holding unit 52 includes a plurality of pairs of sandwich structures 522 on the conveying surface of a transport conveyor 521, which sandwich, from the both sides, the group G of bags in a collected state in the thickness direction, and each sandwich structure 522 includes two sandwich members 522a, 522b disposed with a space therebetween which corresponds to the thickness of the group G of bags. The two sandwich members 522a, 522b move in the conveying direction. The sandwich member 522a moves while supporting the bags B sequentially supplied in the standing position from the receiving unit 51. After the group G of bags is collected, the sandwich member 522b holds the group G of bags from behind to sandwich the same with the sandwich member 522a. Then, keeping the state the way it is, they move to a bag delivery position (position P3 in Figure 7) where the bags B are delivered to the group weight checker 6 in the downstream process. When the group G of bags is moved to the bag delivery position, the group G of bags is pushed out to the front by a pushing member (not shown) arranged at a position corresponding to the position P3, and is supplied to a tray 61 of the group weight checker 6.

### <GROUP WEIGHT CHECKER 6>

The group weight checker 6 is a group weight obtaining means to receive the group G of bags supplied from the collecting unit 5 in the upstream process and to obtain the weight Wg of the group G of bags by measuring by a load cell 61a disposed at the lower portion of the tray 61. The group weight checker 6 includes a boxing member (not shown) that pushes the group G of bags in the horizontal direction into the box C set in the boxing/sealing unit 7 in the downstream process, and the discharge member (not shown) that discharges the group G of bags by pushing out to the outside of the process. As described above, the control unit 10 adds up the weights wₙ of the individual bags B included in the group G of bags and calculates, in advance, the group weight W2, which is the sum of the addition. Based on this sum and the weight Wg, the control unit 10 determines the adequacy of the weight or the number of the individual bags B included in such group G of bags.

When the group weight W2 is equal to the measured weight Wg, the control unit 10 determines that the weight or the number of the individual bags B included in such group G of bags is adequate and also transmits a control signal to the above described boxing member so as to pack the group G of bags in the box C. In addition, when the group weight W2 is not equal to the measured weight Wg, the control unit 10 determines that the weight or the number of the individual bags B included in such group G of bags is not adequate, i.e., that accidents such as that all or some of the individual bags in the group G of bags are left out in the course of the process and the like occurred. The control unit 10 also transmits a control signal to the above described discharge member so as to discharge the entire group G of bags to the outside of the process.

### <BOXING/SEALING UNIT 7>

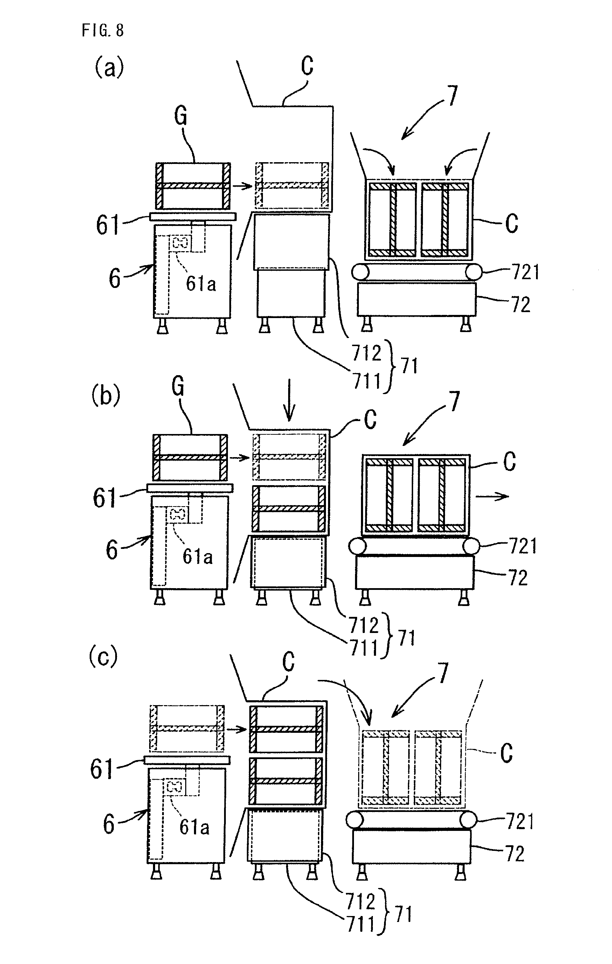

The boxing/sealing unit 7 sets the empty box C in a state in which the box C is opened toward the group weight checker 6; and includes a boxing table 71 whose height is variable according to the number of lines (rows) of the groups G of bags pushed in from the group weight checker 6 and a sealing device 72 that seals the box C in which a predetermined number of rows of the groups G of bags are packed by the boxing table 71. In order to allow the height of the boxing table 71 to be variable according to the number of rows of the groups G of bags to be pushed in, the boxing table 71 is disposed with a base 711 and a lifting and lowering table 712 disposed to be capable of moving upward and downward with respect to the base 711. When the bags G on the first row are packed in the box, as shown in Figure 8(a), the lifting and lowering table 712 adjusts the lower surface of the box C that is set to the same height as the tray 61 of the group weight checker 6. When the bags G on the second row and the followings are packed in the box, as shown in Figure 8(b), the lifting and lowering table 712 lowers by the height of the group G of bags at a time and moves the box C downward to a position where the bags G on the second row and the followings can be received.

Therefore, the predetermined number of rows of the bags G are packed in the box as shown in Figure 8(c) simply by being pushed in the horizontal direction by the boxing member of the group weight checker 6. The box C in which box packing is completed is moved to the sealing device 72, and the opening of the box C is closed by a cover by the sealing device 72 as shown in Figures 8(a) and (b). Then, the box C is moved by a transport conveyor 721 to the gross weight checker 8 in a next process. Note that the box C is set in the boxing table 71 by a weighing transport conveyor 73 (Figure 2) equipped with a load cell, and at that time, as a tare weight obtaining means, the weighing transport conveyor 73 measures and obtains a weight (tare weight) Wp of the box C in an empty state, and transmits the weight information signal to the control unit 10.

### <GROSS WEIGHT CHECKER 8>

The gross weight checker 8 is a weighing transport conveyor equipped with a load cell 8a. As a conveying means, the gross weight checker 8 conveys the box C supplied from the boxing/sealing unit 7 to the downstream process, and as a gross weight obtaining means, the gross weight checker 8 measures and obtains a weight Wₕ of the packaging material and a predetermined number of individual bags B packaged in the packaging material, and transmits the weight information signal to the control unit 10. The control unit 10 calculates a sum of the addition of that gross weight W1 of the predetermined number of rows of groups G of bags which is obtained from the weights Wg measured by the group weight checker 6 and the tare weight Wₚ measured by the weighing transport conveyor 73, and this sum is used as a reference for the weight check of the plurality of individual bags B packaged in the packaging material. In other words, when the sum of the known gross weight W1 and the tare weight Wp is equal to the weight Wₕ measured by the gross weight checker 8, it is determined that all the individual bags B are adequately packaged in the box C. When they are not equal to each other, it is determined that some of the individual bags B are left out or the like and not adequately packaged. Based on such determination, the control unit 10 transmits a control signal to the defective box sorting unit 9.

### <DEFECTIVE BOX SORTING UNIT 9>

The defective box sorting unit 9 is a transport conveyor. The defective box sorting unit 9 conveys the box C in which the individual bags B are adequately packaged to a next process based on the control signal from the control unit 10, and at the same time operates an elastic cylinder (not shown) disposed on the lateral side of the transport conveyor to discharge the box C, in which the individual bags B are not adequately packaged, to the outside of the process.

### <DETERMINATION PROCESS FLOW BY CONTROL UNIT 10>

Next, a determination process flow by the control unit 10 in the boxing device 100 configured as described above is described. Principally, the control unit 10 integrally performs a determination process regarding the thickness of the individual bag B and the thickness of the group G of bags which is obtained as the sum of thicknesses of the individual bags B, and another determination process regarding the weight of the individual bag B, the weight of the group G of bags, and the weight of the packaging material in which the predetermined number of rows of the bags G are packaged: however, for the sake of simplicity of description, these determination process flows are mutually separated and described.

### <DETERMINATION PROCESS FLOW BASED ON THE BAG THICKNESS>

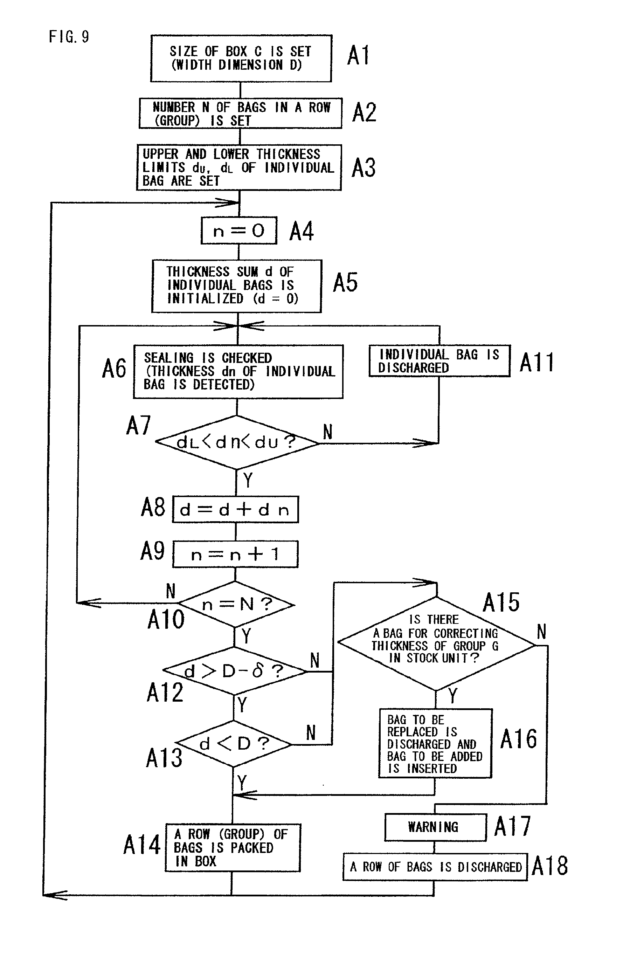

Figure 9 shows a determination process flow that is performed based on the bag thickness. Before operating the boxing device 100, as data necessary to the determination process by the control unit 10, it is required to set and input the size (width dimension D) of the box C that is used, the number N of the individual bags B included in one row (group), and the upper limit d_{U} and the lower limit d_{L} of the thickness dimension of the individual bag B (steps A1 to A3). When the boxing device 100 starts operation, first, initial values of the number n of the individual bags B added to the group G of bags and a thickness sum d of these individual bags B are reset to zero (steps A4 and A5). Next, a thickness dₙ of the individual bag B is detected by the seal checker 2 (step A6) to determine whether or not it is within the predetermined thickness range (step A7). When the thickness dₙ of the individual bag B is within the predetermined thickness range, the thickness dₙ of such individual bag B is added to the thickness sum d of the group (step A8), the number n of the individual bags B added is counted (step A9), and this process is repeated until the number N set in step A2 is reached (step A10). Note that when the thickness dₙ of the individual bag B is not within the predetermined thickness range, the thickness dₙ of such individual bag B is not added to the thickness sum d. Instead, such individual bag B is discharged to the outside of the process (step A11), and the thickness dₙ of a next individual bag B is detected (step A7).

When the number of the individual bags B whose thicknesses are added reaches the number N, whether or not it is adequate to pack the group G of bags in the box C is determined. Specifically, whether the thickness sum d of the group G of bags is too small (step A12) or large (step A13) compared to the width dimension D of the box C is determined. A value δ in step A12 is selected based on the width dimension D of the box C, the number N of bags in a group G, and the like, and it is an empirical value that indicates a possible occurrence of damage of a bag and a pinhole when the difference between the width dimension D and the bag thickness sum d (space between the box C and the group G of bags) is greater than the value δ. When it is determined that the thickness of the group G of bags is adequate for packing in the box C, such bags G of the first row are packed in the box (step A14). When it is determined to be inadequate, a determination is made as to whether or not there is an individual bag B having the thickness with which the thickness of the group G of bags can be corrected to be within the predetermined range, among the plurality of spare bags B stocked in the stock unit 4 (step A15).

When it is determined in step A15 that there is such an individual bag B, the bag B to be replaced is discharged from the group G of bags to the stock unit 4. At the same time, the individual bag B to be added is selected from the stock unit 4 and inserted to the group G of bags. On the other hand, when it is determined that there is no such an individual bag B, a warning that such group G of bags is inadequate to be packed in the box is displayed on the touch panel display 20 (step A17), and such group G of bags is discharged to the outside of the process when reached the group weight checker 6 (step A18). Thereafter, the determination process after step A4 is repeated until the boxing device 100 is stopped.

### <DETERMINATION PROCESS FLOW BASED ON THE BAG WEIGHT>

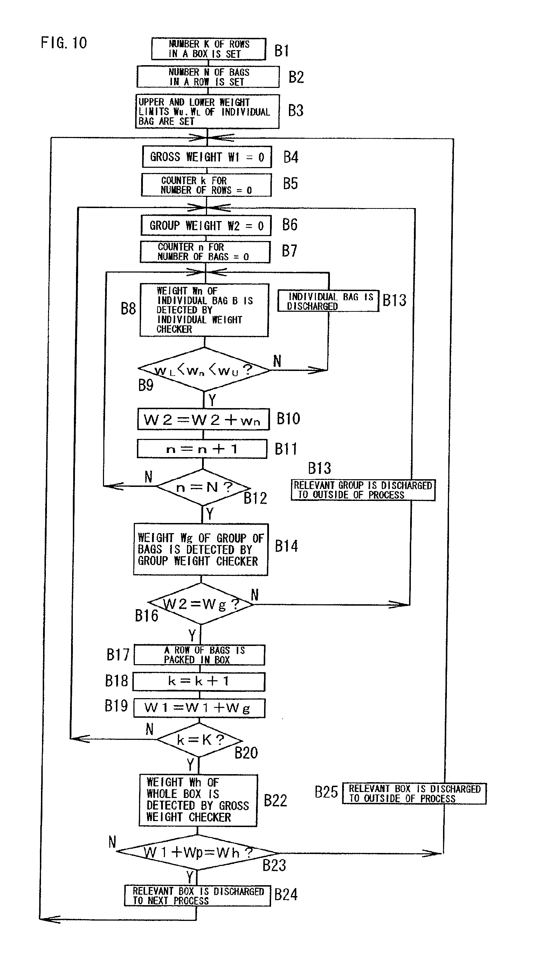

Figure 10 shows the determination process flow performed based on the bag weight. Before operating the boxing device 100, as data necessary to the determination process by the control unit 10, it is required to set and input the number K of rows (lines) of the groups G of bags to be packed in the box C, the number N of the individual bags B included in one row (group), and the upper limit w_{U} and the lower limit w_{L} of the weight of the individual bag B (steps B1 to B3). When the boxing device 100 starts operation, first, initial values of the gross weight W1, a counter k for the number of rows, the group weight W2, and the bag number counter n are reset to zero (steps B4 to B7). Next, the weight wₙ of the individual bag B is detected by the individual weight checker 1 (step B8) and whether or not it is within the predetermined weight range is determined (step B9). When the weight wₙ of the individual bag B is within the predetermined weight range, the weight wₙ of such individual bag B is added to the group weight W2 (step B10), the number n of the individual bags B added is counted (step B11), and this process is repeated until the number N set in step A2 is reached (step B12). Note that when the weight wₙ of the individual bag B is not within the predetermined weight range, it is not added to the group weight W2. Instead, such individual bag B is discharged to the outside of the process (step B13), and the weight wₙ of a next individual bag B is detected (step B8).

When the number of the individual bags B whose weights wₙ are added reaches the number N, the weight Wg of the group G of bags is detected by the group weight checker 6 (step B 14), and whether or not the weight Wg is equal to the group weight W2 is determined (step B16). When they are equal to each other, such group of bags is packed in the box (step B 17), the number k of rows to be packed in the box is counted (step B 18), the weight Wg is added to the gross weight W1 (step B19), and this process is repeated until the number K of rows set in the step B1 is reached (step B20). Note that when the group weight W2 is not equal to the weight Wg, such group G of bags is discharged to the outside of the process (step B13), and the process for a new group G of bags is started (step B6).

When the number of rows to be packed in the box reaches the set number K, the weight Wₕ of the whole box is detected by the gross weight checker 8 (step B 22), and whether or not the weight Wₕ is equal to the sum of the gross weight W1 and the tare weight Wp is determined (step B23). When it is determined that they are equal to each other, such box C is conveyed to a next process (step B24); and when it is determined that they are not equal to each other, such box C is discharged, as a defective product, to the outside of the process (step B 25). Thereafter, the determination process after step B4 is repeated until the boxing device 100 is stopped.

### <CHARACTERISTICS OF THE BOXING DEVICE IN THE PRESENT EMBODIMENT>

As a result of the above described configuration, the boxing device 100 according to this embodiment has the following characteristics.

First, as a characteristic, the boxing device 100 according to this embodiment includes the thickness detection means (seal checker 2) to detect the thickness dₙ of the each of individual bags B, and the calculation means (control unit 10) to add the thicknesses dₙ of individual bags B detected by the thickness detection means before the group G of bags, which is formed by collecting a plurality of individual bags B to be packed in the box C of the defined size, is packed in the box. Therefore, it is possible to detect, in advance, a possibility of occurrence of problems such as breakage of a bag during box packing, formation of a pinhole in the course of conveyance after box packing, and the like.

Second, as a characteristic, the boxing device 100 according to this embodiment includes a determination means (control unit 10) to determine whether or not it is adequate to pack the group G of bags in the box C of the defined size based on the result of addition by the calculation means. Therefore, it is possible to take an appropriate countermeasure, based on the determination result, to prevent problems such as breakage of a bag during box packing, formation of a pinhole in the course of conveyance after box packing, and the like.

Third, as a characteristic, the boxing device 100 according to this embodiment includes the selection means (control unit 10) that is configured such that when the group G of bags is determined by the determination means that it is inadequate to be packed in the box C of the defined size, the selection means selects a bag to be replaced from such group G of bags. Therefore, it is possible to easily take an appropriate countermeasure to prevent problems such as breakage of a bag, a pinhole, and the like.

Fourth, as a characteristic, the boxing device 100 according to this embodiment includes the stock unit 4 to stock spare individual bags B and the selection means (control unit 10) to select an individual bag B among spare individual bags B, which is to be added to the group G of bags instead of the bag to be replaced. Therefore, it is possible to further easily take an appropriate countermeasure to prevent problems such as breakage of a bag, a pinhole, and the like.

Fifth, as a characteristic, the boxing device 100 according to this embodiment automatically discharges the bag to be replaced from the group G of bags to the stock unit 4 and automatically inserts a bag to be added instead of the replaced bag from the stock unit 4. Therefore, occurrence of a broken bag, a pinhole, and the like is reliably prevented, without stopping the device or taking the time of an operator.

Sixth, as a characteristic, the boxing device 100 according to this embodiment is configured such that when an appropriate countermeasure cannot be taken with a spare individual bag B for the group G of bags determined to be inappropriate to be packed in the box C, the boxing device 100 discharges such group G of bags and issues a warning on the touch panel display 20. Therefore, even when there is not any appropriate individual bag B in the stock unit 4, occurrence of a broken bag, a pinhole, and the like is reliably prevented. Note that the device may be stopped along with displaying a warning, instead of discharging the group G of bags.

Seventh, as a characteristic, the boxing device 100 according to this embodiment serves as the thickness detection means by utilizing the seal checker 2 to apply pressure to each individual bag B in the thickness direction thereof to detect the bag thickness dₙ at the time of pressure application and then determine whether or not the bag is adequately sealed based on the thickness dₙ. Therefore, it is possible to produce the device at low cost, compared to the case where the thickness detection means is separately provided.

Eighth, as a characteristic, the boxing device 100 according to this embodiment includes the individual weight obtaining means (individual weight checker 1) to obtain the weight wₙ of the individual bag B; the group weight obtaining means (group weight checker 6) to measure the weight Wg of the group G of bags, which is formed by collecting a plurality of individual bags B to be packed in the box; and the determination means (control unit 10) to determine the adequacy of the weight or the number of articles to be packed in the box based on the weight Wg. Therefore, it is possible to detect problems before box packing and take an appropriate countermeasure.

Ninth, as a characteristic, the boxing device 100 according to this embodiment is configured such that the individual weight obtaining means is the individual weight checker 1 disposed on the upstream side of the group weight obtaining means. Therefore, it is possible to actually measure the weight of each individual bag B and more accurately determine the weight of the group G of bags.

Tenth, as a characteristic, the boxing device 100 according to this embodiment includes the tare weight obtaining means (weighing transport conveyor 73) that measures the weight Wₚ of the box C that is a packaging material, and the sum of the known gross weight W1 and the weight Wp measured by the tare weight obtaining means is used as a reference for the weight check of the plurality of individual bags B packaged (packed) in the box C. Therefore, even when the tare weight of the box C that is a cardboard recyclable container significantly changes due to the humidity, aged deterioration, and other reasons, it is possible to confirm the adequacy of the weight or the number of the individual bags B that are packaged by checking the actual gross weight Wₕ with the tare weight Wp included after packaging is completed. As a result, when some of the plurality of individual bags B are left out at the time of packaging, it is possible to reliably detect such a situation. In other words, it is possible to determine whether or not a plurality of individual bags (articles) are adequately packaged in the packaging material.

### <ALTERNATIVE EMBODIMENTS OF THE ABOVE EMBODIMENT>

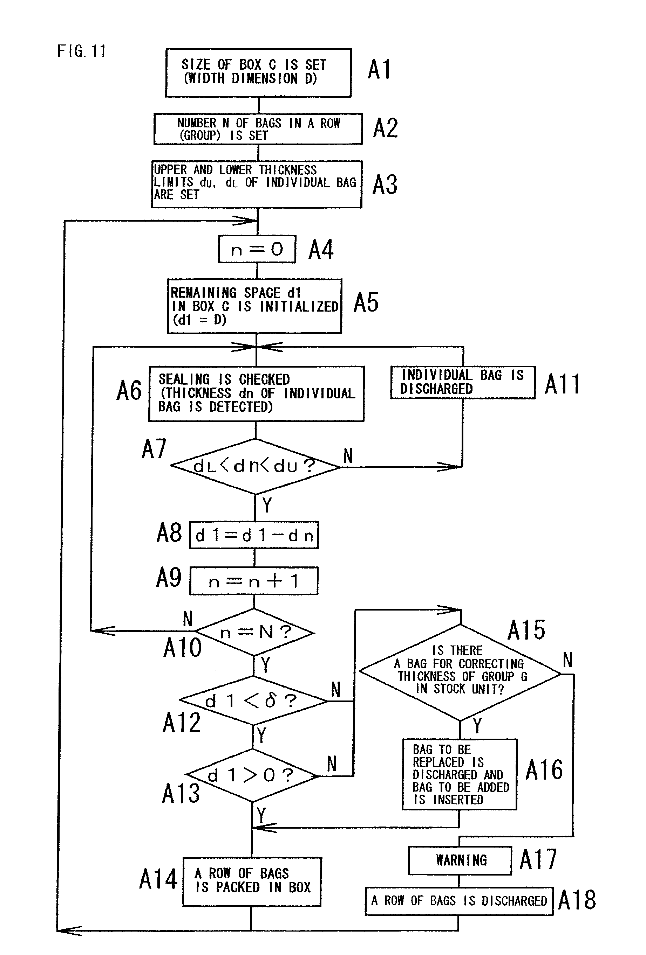

According to the above embodiment, the thicknesses dₙ of the individual bags B detected by the thickness detection means are added and whether or not it is adequate to pack the group G of bags in the box C is determined based on the result of the addition and the width dimension D of the box C. However, instead of this, as shown in Figure 11, the thicknesses dₙ of individual bags B are subtracted one by one from a predetermined value (the width dimension D of the box C), and whether or not it is adequate to pack the group G of bags in the box C is determined based on the result of subtraction (a remaining space d1 resulted in the box C). Specifically, the possibility of occurrence of a pinhole and a broken bag is determined in advance depending on whether the remaining space d1 is too large (step A12) or too small (step A13).

According to the above embodiment and the above alternative embodiment, whether or not it is adequate to pack the group G of bags in the box C of the defined size is determined when addition or subtraction from a predetermined value is finished for all of the individual bags B constituting the group G of bags. However, when the number N of the individual bags B included in the group G of bags is large and when most of the individual bags B have the thicknesses dₙ close to either the upper limit or lower limit in the predetermined thickness range, it may be possible to determine that the group G of bags is inadequate to be packed in the box C before finishing addition or subtraction for all the individual bags B. For example, when the individual bags B each of which has the thickness close to the upper limit are continuously supplied, even if all the rest of the individual bags B to constitute the group G of bags have thicknesses dₙ close to the lower limit, there is a case where these individual bags B do not fit in the remaining space d1 in the box C and thus cannot be packed therein.

In such a case, nothing can be done even with a spare individual bag stocked in the stock unit 4. Therefore, all the bags in the group G need to be discharged, which may reduce process efficiency. To solve this problem, before addition or subtraction is finished for all of the individual bags B, a check may be performed to determine whether the remaining space is too small even if all the rest of the individual bags B are the ones each of which has the thickness dₙ close to the lower limit, or the remaining space is too large even if all the rest of the individual bags B are the ones each of which has the thickness dₙ close to the upper limit, and determine whether or not it is adequate to pack the group G of bags in the box C. By so doing, it is possible to take an adequate countermeasure at an early stage, and a reduction in process efficiency is prevented.

According to the above embodiment and the above alternative embodiment, when the group weight W1 is not equal to the weight Wg measured by the group weight checker 6, such group G of bags is discharged to the outside of the process. However, when the reason for the discrepancy is determined to be a shortage of the number of bags which is caused as some of the individual bags are left out, the shortage may be replenished from the stock unit 4. When it is determined that there is a shortage in the number of articles, the amount of the shortage is automatically replenished. Thereby, a high productivity can be maintained.

According to the above embodiment and the above alternative embodiment, the weight wₙ of the individual bag B is measured by the individual weight checker 1 disposed in the upstream side of the group weight checker 6. However, a defined weight (for example, the median of a defined weight range) of the individual bag B may be used as the weight wₙ. Note that, here, when the defined number of individual bags B to be packed in the box is large, variations in the weights of the individual bags B each of which is in the defined weight range are accumulated so that. the weight Wₕ of the whole box may have an error greater than the weight corresponding to one individual bag B. This situation is difficult to be distinguished from the situation where some bags are missing. However, with the present invention, because the individual bags B to be packed in the box are weight-checked on a predetermined small number basis by separating such individual bags B into a plurality of groups each of which has the predetermined small number of bags B, it is possible to reliably prevent from erroneously regarding the variations in the weights of the individual bags B as the occurrence of missing of some bags B.

According to the above embodiment and the above alternative embodiment, the packaging material to be used is the box C of the defined size, which is a cardboard recyclable container. However, it is not limited thereto. A container may be formed by a material other than a cardboard. For example, it may be a plastic container, and it may not need to be a recyclable container. In addition, it may be a container having a different shape such as a bag shape other than a box shape.

In the above embodiment and the above alternative embodiment, a memory medium that stores the weight Wₚ of the box C may be mounted to the box C, and a transport conveyor having a function to read the tare weight Wₚ from the memory medium may be disposed instead of the weighing transport conveyor 73. For example, an IC tag in which the weight Wp of the box C is stored may be attached to the box C, and an IC tag reader may be disposed to the transport conveyor provided instead of the weighing transport conveyor 73. Alternatively, a barcode (including a QR code) in which the weight Wₚ of the box C is stored may be attached to the box C, and a bar code reader may be disposed to the transport conveyor provided instead of the weighing transport conveyor 73. Note that the transport conveyor used instead of the weighing transport conveyor 73 is preferably incorporated into the box-packing process line of the boxing device 100, in a manner in which the transport conveyor can smoothly perform the process to read the tare weight Wp. In addition, the tare weight Wₚ that is read out is transmitted to the control unit 10, and thereafter the same process as described in the above embodiment is performed.

Additionally, the boxing device of the present invention is not limited to the embodiment described above, and various changes and modifications can be made herein without departing from the scope of the invention.

## Claims

1. A boxing device that packs a predetermined weight or a predetermined number of articles in a box, comprising:
a collecting unit configured to collect the articles as a group;
a group weight measuring unit configured to measure a weight of the group;
a determination unit configured to determine whether or not the group is appropriate to be packed in the box based on the weight measured by the group weight measuring unit; and
a boxing unit configured to pack, in the box, a plurality of the groups determined
by the determination unit to be appropriate to be packed in the box.

2. The boxing device according to claim 1 further comprising an individual weight measuring unit configured to measure a weight of each of the articles and positioned on the upstream side of the group weight measuring unit.

3. The boxing device according to claim 1 or 2 further comprising a replenishment unit including a stocking place for stocking the article and configured to replenish, when the group is determined by the determination unit to be not adequate to be packed in the box because of a shortage in the number of the articles, the shortage with the article from the stocking place.

4. A packaging device, comprising:
a tare weight obtaining unit configured to obtain a weight of a packaging material;
a packaging unit configured to package a plurality of articles whose weights are known in the packaging material; and
a weight checking unit configured to check a weight of the plurality of articles packaged in the packaging material, using a sum of the weight obtained by the
tare weight obtaining unit and the known weights as a reference.

5. A packaging device, comprising:
a tare weight obtaining unit configured to obtain a weight of a packaging material;
a packaging unit configured to package a plurality of articles whose weights are known in the packaging material;
a gross weight measuring unit configured to measure a weight of the plurality of articles packaged in the packaging material; and
a determination unit configured to determine whether or not the plurality of articles are adequately packaged in the packaging material based on a sum of the weight obtained by the tare weight obtaining unit and the known weights, and the
weight measured by the gross weight measuring unit.

6. The packaging device according to claim 4 or 5, wherein the tare weight obtaining unit measures the weight of the packaging material.

7. The packaging device according to claim 4 or 5, wherein the packaging material includes a memory medium in which the weight of the packaging material is stored, and
the tare weight obtaining unit is configured to read the weight of the packaging
material stored in the memory medium.

8. The packaging device according to any one of claims 4 through 7, wherein the packaging material is a cardboard container.

9. The packaging device according to any one of claims 4 through 8, wherein the packaging material is a recyclable container.
